# EUROPEAN PATENT APPLICATION

(11) **EP 4 826 613 A1**
(43) Date of publication of application: **21.10.2026**
(21) Application number: 25170279.1
(22) Date of filing: 14.04.2025
(51) Int. Cl.: G06Q 10/063, G06V 30/422

(54) **METHOD FOR ANALYZING AN INDUSTRIAL SYSTEM CONFIGURATION AND/OR INDUSTRIAL PROCESS**

(71) Applicant: ABB SCHWEIZ AG, 5400 Baden (CH)
(72) Inventor: STARK, Katharina, 69469 Weinheim (DE); SCHOCH, Nicolai, 69120 Heidelberg (DE); HOERNICKE, Mario, 76829 Landau (DE)
(74) Representative: Maiwald GmbH

(57) **Abstract**

The invention provides a method for analyzing an industrial system configuration and/or industrial process by analyzing graphical engineering data representing the industrial system and/or industrial process, the method comprising inputting graphical engineering data representing an industrial system and/or industrial process into an Al module, the engineering data comprising graphical elements representing components of the industrial system and/or process-related attributes of components of the industrial system; processing, by means of the Al module, the graphical engineering data, the processing comprising the Al module detecting one or more components and/or process-related attributes represented by the graphical elements comprised in the engineering data; providing the detected components and/or detected process-related attributes to a verification module; accessing, by the verification module, a reference dataset, the reference dataset comprising character-based data representative of candidate components and/or candidate process-related attributes; and verifying, by the verification module, the detected components and/or process-related attributes based on the candidate components and/or candidate process-related attributes.

## Description

### FIELD OF THE INVENTION

The invention provides a method for analyzing an industrial system configuration and/or industrial process a corresponding data processing system, a computer program product, and a computer-readable medium.

### BACKGROUND

Industrial system configurations and industrial process configurations are often represented in the form of engineering data comprising process diagrams provided as documents that in many cases are only available as scanned versions of paper documents or file types that cannot be easily analyzed in an automated manner (e.g. PDF). However, there is a need to make the documents available in a manner that the system/process configurations they represent can be processed in an automated manner, i.e., in a digital, computer-readalbe form (e.g. P&lds as DEXPI-file). For example, the configurations can then be used to generate control code for the system/process, monitoring of the system/process, further configuring the actual system/process, modifying the configuration of the actual system/process, configuring a new system/process based on the actual system/process, or the like.

As will be understood, these purposes require analysis that is reasonably reliable and accurate. OCR will often not yield the desired results with sufficient accuracy, as there are generally predominantly graphical elements, such as symbols representing components of the system/process and their connections, which OCR cannot recognize and translate into characters. Even any descriptions (such as names or state descriptions) written out in text within the diagrams may be difficult to reliably detect with OCR given the predominantly graphical nature of the diagrams and, in many cases, closely arranged elements and sometimes poor reproduction quality of the document or manual additions or corrections, e.g. hand-written in the drawings (and for example scanned afterwards).

Thus, it is an object of the present disclosure to provide a method and system allowing for improved accuracy in automatic analysis of industrial system configurations and/or industrial processes.

### SUMMARY

The invention provides a method, a data processing system, a computer program product, and a computer-readable medium according to the independent claims.

The present disclosure provides a method for analyzing an industrial system configuration and/or industrial process by analyzing graphical engineering data representing the industrial system and/or industrial process, the method comprising inputting graphical engineering data representing an industrial system and/or industrial process into an Al module, the engineering data comprising graphical elements representing components of the industrial system and/or process-related attributes of components of the industrial system. The method further comprises processing, by means of the Al module, the graphical engineering data, the processing comprising the Al module detecting one or more components and/or process-related attributes represented by the graphical elements comprised in the engineering data. The method further comprises providing the detected components and/or detected process-related attributes to a verification module. The method further comprises accessing, by the verification module, a reference dataset, the reference dataset comprising character-based data representative of candidate components and/or candidate process-related attributes. The method further comprises verifying, by the verification module, the detected components and/or process-related attributes based on the candidate components and/or candidate process-related attributes.

In particular, the method is a computer implemented method, for example carried out by a processing system.

The Al module may be configured to output a character-based, in particular text-based, representation of the detected components and/or process-related attributes, such as a name identifying the detected component and/or process-related attribute, and optionally to output a confidence level associated with each prediction.

For example, the output may comprise a component name of a detected component alone or in combination with its associated detected component type and/or with its associated detected process-related attributes. The output may alternatively comprise a component type without a component name or with an indication of absence or incompleteness of component name, optionally in combination with the component's associated detected process-related attribute.

As will be understood from the above, an Al module specifically trained for the analysis of the engineering data, including graphical elements, can be employed. The Al module can identify components, usually represented by graphical elements, as well as process-related attributes (for example alarm levels or the like). Using an appropriate Al module will already yield good results. In order to increase reliability, a verification module is provided by the present disclosure. The verification module accesses additional data, i.e. a reference dataset, to check whether the output of the Al module is likely to be correct in the light of the reference dataset. As only one example, the reference dataset may have a list of component names of components expected to be present in the graphical engineering data and information on said components, e.g. their alarm levels. For example components or associated alarm levels output by the Al module can be checked for consistency with the reference data. Several examples will be provided further below.

Thus, it will be understood that the reliability of the overall analysis can be increased. While there may still be errors or uncertainties, it will also be possible to better identify them, which allows for carrying out corrective measures in a targeted manner.

In the present disclosure, an industrial system may comprise components, particularly including hardware components, such as transmitters, pumps, tanks, valves, heaters, and/or software components, such as control software. In some cases, software and hardware components may be integrally formed. For example, hardware components may comprise firmware and/or have a controller provided with the hardware components. The industrial system may also comprise hardware connections, such as piping and/or electrical connections, and/or software connections, such as data connections e.g. via communication interfaces, between components. Information specifying the industrial system may comprise information on some or all of the above components and optionally on some or all of the above connections.

An industrial process, according to the present disclosure, may comprise a process carried out in an industrial system, such as the one described above. Information specifying an industrial process may comprise at least part of the information specifying the indsutrial system. In addition, information specifying the industrial process may comprise information specifying operation parameters of one or more components, operation sequences for one or more components, interactions between one or more components, and/or one or more rule-based routines such as issuing alarms, prompting shut-downs according to predetermined rules.

There may be information that represents both, operational information and component information. For example, a component may be associated with alarm levels. This may be seen as a component attribute and at the same time information on the industrial process, as the operation within the industrial process may include issuance of an alarm in certain circumstances (e.g. a rule-based alarm issuance).

Analyzing an industrial system configuration and/or industrial process, according to the present disclosure, may comprise analysis at any phase of the system or process, for example a phase when the industrial system and/or process are being set up and configured and/or the operative phase of the industrial system and/or process, i.e., after initial setup and configuration and/or service or maintenance phase and/or a phase of updating and/or reconfiguring the system or process.

Engineering data may comprise at least part of the information specifying and industrial system and/or some of the information specifying an industrial process. Engineering data may comprise character-based information, at least part of which may be extracted from the engineering data and incorporated in the reference dataset of the present disclosure. For example, character-based engineering data may comprise component lists of components present in the industrial system and/or involved in the industrial process, alarm lists, specification data for components, or the like.

Engineering data (often predominantly) comprises graphical engineering data, i.e. graphical information (e.g. non-character-based information) representing the industrial system and/or industrial process.

Typical examples of graphical engineering data representing the industrial system and/or industrial process may comprise system and/or process diagrams. In particular, graphical engineering data may represent components of the industrial system and/or process-related attributes of components of the industrial system. An example for graphical engineering data are piping and instrumentation diagrams (also referred to as "P&ID").

The graphical engineering data, particularly P&IDs, may contain topological information on industrial plant topology, and information on piping and instrumentation, e.g. what device is connected to another device or what controller (e.g. PI or PID controller) and instrument are connected to which device. Thus, not only information on material streams are given, but also information on signal lines.

A system and/or process diagram may comprise symbols representing components and/or connections between components and/or process-related attributes.

A system and/or process diagram may comprise textual information like letters or numbers (e.g. textual information specifying alarm levels "high" and "low" within the diagram and/or labelling a component within the diagram) in addition to graphical information.

A system and/or process diagram may be available in purely non-character-based form, e.g. as image data, or may comprise at least some character-based information.

Textual information may be provided in the system and/or process diagram in non-character-based form, such as image data. Optionally, in some cases, at least some of the textual information may be provided in character-based form, e.g. embedded into a document comprising graphical information, such as for example embedded in a PDF file.

An Al module, according to the present disclosure may be a software module comprising an Al model configured to process engineering data, particularly graphical engineering data. The Al model may be a model trained to process image data. The Al model may be a multi-modal model trained to process image data and character-based data. The Al model may be a model trained based on labelled engineering data, for example. Alternatively, the Al model may be a pre-trained model without specialized training on engineering data, such as, particularly multi-modal, generative pre-trained transformer models. Any suitable known model architectures may be employed, for example convolutional neural networks (CNNs) based models, or vision transformers (ViTs), and/or algorithms for optical character recognition (OCR). For example, LeNet, ResNet, AlexNet, original ViT, DeiT, owlViT, Tesseract, EasyOCR, GCP-OCR, Azure-OCR may be employed, as only some examples.

Detecting one or more components represented by the graphical elements comprised in the engineering data, according to the present disclosure, may comprise determining presence of the one or more components.

Detecting one or more components represented by the graphical elements comprised in the engineering data, according to the present disclosure, may include detecting a component name of the one or more components. For example, component names may be provided within the diagram, e.g., as label associated with a symbol representing the component type of the component.

Alternatively or in addition, detecting the one or more components may comprise identifying a component type of the component, e.g. that the component is of the type "transmitter", "pump", "valve", or "tank". A component type may be determined based on a graphical symbol in the graphical engineering data. It is noted that there may be components within the graphical engineering data that do not have a component name or where the component name cannot or not fully be processed and/or cannot be unambiguously associated with a component. In such a case, a component type may be determined based on a graphical symbol and, optionally, the output of the Al module may comprise the component type and optionally indicate unavailability or incompleteness of a component name for said component.

Process-related attributes represented by the graphical elements comprised in the engineering data, according to the present disclosure may comprise alarm levels, operational parameters, or the SIL (Safety Integrity Level) level or further specifying the elment type . Process-related attributes may comprise graphical symbols, sometimes symbols incorporating textual information (such as the words "high" and "low" incorporated within a symbol).

As such, optionally, the detecting one or more components and/or process-related attributes represented by the graphical elements comprised in the engineering data may also comprise identifying that a process-related attribute, e.g. alarm level, represented in the graphical engineering data is associated with a detected component. The output of the Al module may comprise information indicating that the component and the process-related attribute are associated.

It will be understood that the present method is flexible in that it can reliably process purely graphical engineering data and engineering data comprising a combination of character-based and graphical engineering data.

Providing the detected components and/or detected process-related attributes to a verification module, according to the present disclosure, may comprise, for example, providing some or all detected component names, component types, and/or process-related attributes detected by the Al module, and optionally comprises providing associations, such as component names and their associated component types and/or component names and their associated process-related attributes and/or component types and their associated process-related attributes. Providing the detected components and/or detected process-related attributes to a verification module, according to the present disclosure, may comprise providing components and/or detected process-related attributes in character-based format, such as letters, numbers, special characters, or the like.

Merely as an example, accessing, by the verification module, the reference dataset, may comprise retrieving and/or receiving a reference dataset by the verification module, e.g. from a local and/or a remote data storage, and processing the data from the reference dataset. Alternatively or in addition, accessing, by the verification module, the reference dataset, may comprise receiving, by the verification module, data from the reference dataset in response to a query by the verification module.

The reference dataset comprises character-based data representative of candidate components and/or candidate process-related attributes.

The character-based data representative of candidate components and/or candidate process-related attributes may comprise at least one of: names of a candidate component, operation parameters associated with a candidate component, signal levels associated with the component, alarm levels associated with a component, potential relationship of a candidate component with one or more other components, categorization of a candidate component, in particular type of candidate component, area of the industrial system where a candidate system may be employed.

It is noted that alternatively or in addition to providing the potential relationship in the character-based data described above, it may also be derived from the character-based data. For example, it a naming scheme may be used to determine that components are have the same loop number and/or that part of the name is identical and/or that they have the same P&ID number. Such information may be derived prior to or as part of the verification process.

Character-based data may comprise information represented as one or more sequences of characters, such as letters, numbers, special characters, or the like.

The reference dataset may comprise, for example, lists, tables, databases, or the like. The reference data may comprise one or more entries. For example, an entry may comprise a component name, a signal name, a process-related attribute, or other information related to industrial systems and processes.

In some cases, signal names associated with a component may be provided in the reference dataset in addition to or alternatively to the component name. Exemplary signal names that may be comprised in the reference dataset may be, e.g. three signals for a valve: analog/binary output to set the valve and zero, one or two input signals for feedback for the current position. It is noted that signal names, in the present disclosure, may be processed in the same or similar manner to component names, e.g. during the verification process, e.g. in terms of matching, character modification, or the like.

The reference data may, for example, comprise associations between multiple entries. For example, there may be an association between an entry comprising a component name and an entry comprising a process-related attribute associated with the component. The association may be explicit, e.g. by providing a link between the entries, common identifiers, or data specifying the association, or may be implicit, for example by entries being in the same line or column in a table.

The reference data may be data provided as part of the engineering data and/or provided separately from the engineering data. For example, reference data may comprise parts lists for machines or sub-systems included in the industrial system, which may be provided by a supplier of said machines or sub-systems. Said data may be independent of the specific industrial system the machines or sub-systems are used in and may not necessarily be incorporated in the engineering data. As briefly mentioned above, optionally the character-based reference data may comprise character-based information from the engineering data.

Candidate components may represent components that are expected to be found in the graphical engineering data, for example, components that are included in parts lists, e.g. of machines that are part of the industrial system or process. Candidate process-related attributes may represent process-related attributes (e.g. alarm levels) that are expected to be found in the graphical engineering data, for example, process-related attributes associated with components that are are expected to be found in the graphical engineering data, such as included in instruments lists, e.g. of units that are part of the industrial system or process.

Verifying the detected components and/or process-related attributes based on the candidate components and/or candidate process-related attributes may comprise, among others, verifying whether a detected component type and/or name is expected to be present, optionally dependent also on the relative location within the industrial system, and/or whether associated process-related attributes are expected for the detected component based on the reference data. Verifying may comprise determining whether component names match naming schemes, optionally dependent on the associated component type.

The verifying may optionally involve modifications of the detected names and/or attributes, by modifying characters by visual similarity and/or by modifying terminology based on semantic similarity, optionally iteratively until a match is found. An output of the verifying may comprise outputting a corrected/modified output of the Al module based on said modification(s).

An output of the verifying may comprise at least part of the output of the Al module and an indication of a confidence level of the output of the Al module and/or may comprise the corrected/modified output of the Al module corrected/modified in the verifying.

The output of the verifying step may be provided in any format, e.g. as purely character-based information or as a combination of character-based information and graphical information. For example, purely character-based information may be used for subsequent computer-based processing, such as for creating control software based on the output. A combination of character-based information and graphical information may, for example, be a recreation of the graphical engineering data comprising symbols and textual information, the textual information being embedded in character-based form and optionally the symbols being individually embedded. Thus, for example, enhanced graphical engineering data can be provided that allows for easy modification and automated processing thereof.

Detailed examples of the verifying are provided further below.

The verifying may comprise, particularly deterministic and/or Al-based, determining, based on the reference dataset, an estimate of a prediction accuracy for the detected components and/or process-related attributes.

For example, such verification may involve one or more checks whether the detected data as output by the Al module matches expected data as provided by the reference dataset. As such, the prediction accuracy may be predicted based on the output of the Al module and the reference dataset.

The prediction accuracy may be the higher the closer the Al module output or modified/corrected Al module output matches expected data.

The prediction accuracy may be quantified and/or provided in any suitable form, for example as a confidence level ("high", "low", "medium") or a percentage (e.g. 89 %) or the like.

For deterministic algorithms, as an example, verifying may comprise determining, in a rule-based manner, whether there is a match with the expected data. Applying such rules may, for example, comprise determining whether a detected component name matches a candidate component name, whether there are unexpected duplicates of component names, whether there is an unexpected number of components of a certain component type, whether component names match naming schemes, particularly for a detected component type and/or in accordance with industry standards, whether the specific combination of two or more of associated detected component name, detected component type, and detected process-related attribute match an expected combination of component name, component type, and/or process-related attribute.

The verifying, particularly determining the estimate of the prediction accuracy, may comprise determining, based on the reference dataset, whether the detected components and/or process-related attributes are present in the reference dataset. In case the detected component and/or process-related attribute are not present in the reference dataset, prediction accuracy may be lower than if they are present. This is advantageous, as presence of an unexpected component or attribute it is a very reliable and easy to check indicator of an error in the Al module's output.

The verifying, particularly determining the estimate of the prediction accuracy, may comprise determining, based on the reference dataset, whether a combination of a detected component and a detected process-related attribute of said detected component matches a combination of a candidate component and process-related attribute of said detected component in the reference dataset. In case the Al module outputs associated component and process-related attribute, and they do not match any combination in the reference dataset, the accuracy may be lower than otherwise. Checking for the combination of component and attribute may allow for particularly reliably determining when errors of association are made (e.g. the attribute is associated with the wrong component) or when a component type is wrongly determined.

The verifying, particularly determining the estimate of the prediction accuracy, may comprise determining, based on the reference dataset, whether a name of the detected component matches a candidate component name in the reference dataset, and optionally, if this is the case, whether the location and/or functional area of the detected component corresponds to the location and/or functional area of the candidate component.

When a component can be identified with its component name (rather than, e.g., only its type), this allows for additional checks allowing for detecting errors and predicting accuracy even more reliable. For example, if a component names match, rather than only component type and/or associated process-related attribute, this allows for reduced ambiguity, as components of a given type and associated attribute (such as valves) may be employed in large number. A name can be used to resolve some of the ambiguity.

Additional checking whether the location and/or functional area of the detected component corresponds to the location and/or functional area of the candidate component allows is an indicator whether the detected component is in an expected location and/or functional area. If it is not, this is a reliable indicator for an error, the accuracy may be lower than otherwise.

The verifying, particularly determining the estimate of the prediction accuracy, may comprise determining, based on the reference dataset, whether a name of the detected component matches a predetermined naming scheme used within the reference dataset. Naming schemes may, for example, be dependent on the industry, the customer, and/or may be provided by standards. For example, it may be expected, based on a naming scheme, that all component names have a series of letters followed by a series of numbers. It may be determined whether the detected component name has a series of letters followed by a series of numbers. If this is not the case, this is an indicator of an error, the accuracy may be lower than otherwise. The deviation from the naming scheme may even allow for conclusions about the nature of the error, i.e. there may be visually similar letters and numbers. Where letters are expected but numbers are present or vice versa, a check may be carried out as to visual similarity of the expected numbers and letters and optionally automatic correction may be carried out.

The verifying, particularly determining the estimate of the prediction accuracy, may comprise determining, based on the reference dataset, whether the name of the detected component matches a naming scheme associated with a component type of the detected component.

Components of a component type may have a specific letter or series of letters in their component name defined by the naming scheme. If the detected component is of a component type and its name does not have said specific letter or series of letters, this is an indicator of an error, the accuracy may be lower than otherwise. The deviation from the naming scheme may even allow for conclusions about the nature of the error, i.e. there may be visually similar letters and numbers. Where letters are expected but numbers are present or vice versa, a check may be carried out as to visual similarity of the expected numbers and letters and optionally automatic correction may be carried out.

As some illustrative examples, depending on the naming scheme, letters/numbers might have a certain meaning, e.g. usually the letters used for transmitters include the type of transmitter (L=level, T= temperature, P=pressure etc. ). In case a letter appears here that does not follow this specific scheme, there may be an error. The same might be true with numbers according to some schemes, e.g. "13" might refer to a certain system (e.g. cooling).

The verifying, particularly determining the estimate of the prediction accuracy, may comprise determining, based on the reference dataset, whether there are duplicates of a name of the detected component, in particular duplicates that are inconsistent with the reference dataset.

In some cases, duplicates of a component name may not be expected, e.g. if an industrial system or process should uniquely identify its components. In such a case, presence of a duplicate among detected component names can be a strong indicator of an error and accuracy may be lower than otherwise. In other cases, duplicates of component names may be allowed and reflected in the reference dataset. However, the number of detected duplicates may deviate from the expected number of duplicates and/or duplicates may be detected within the same functional area although the reference dataset indicates that there are no duplicates within any functional area or within said specific functional area. In these cases, accuracy may be lower than otherwise. Such checks for duplicates are advantageous because they allow for detecting errors even for otherwise plausible-looking detection results (e.g. correct name-type-attribute combination, naming scheme, functional area). They allow for taking into account the overall context, thereby increasing reliability.

The verifying, particularly determining the estimate of the prediction accuracy, may comprise determining, based on the reference dataset, whether, in case a name of the detected component does not match a candidate component name in the reference dataset, retrieving known interrelations between the name and/or component type of the detected component and other components and determining, based on the interrelations, whether presence of another detected component supports potential presence of the detected component.

This allows for resolving potential errors and reducing the rate of low-accuracy results. For example, it may be known that there is likely to be a valve associated with piping connecting two components. If such a valve is identified by name in the graphical engineering data and detected by the Al module, said valve may not necessarily be mentioned in the reference dataset, such that no matching candidate component name may be found for the detected valve. While, as mentioned above, lack of a matching candidate component could be an indicator that there was a detection error, using knowledge such as a valve being expected in association with piping connecting two components, the accuracy may be increased as compared to when there is no expectation of the valve being present.

The verifying, particularly determining the estimate of the prediction accuracy, may comprise determining, based on the reference dataset, whether a variation of a name of the detected component based on modification of characters of the name and/or a semantic variation of the name matches a candidate component name in the reference dataset.

For example, as explained above, some characters are visually similar, e.g. "O" and "0" and prone to detection errors. Similarly, different textual descriptions may be used for the same concept (e.g. different names of alarm levels). In the process of the verification, modifications of the component name may be generated employing character variation and/or semantic variation of the component name, optionally in an iterative manner. The checks described herein as part of the verifying may be applied to the modified component name(s). In case a modified component name performs better in the verification procedure, e.g. with the checks described herein, may be carried out for the different modifications, the detected component name may be replaced with the modified component name. Moreover, the modified component name may be estimated as having a higher prediction accuracy than the detected component name. As outlined above, the modified component name may then be output by the verification module, optionally instead of the detected component name.

The verifying, particularly determining the estimate of the prediction accuracy, may comprise determining, based on the reference dataset, whether a component type of the detected component, optionally provided by the Al module or derived from the Al module's output, matches a component type in the reference dataset, particularly whether both the name and the component type of a detected component and a candidate component in the reference dataset match.

This allows, reliably identifying errors and/or estimating low prediction accuracy. For example, in case no matching component type is found in the reference dataset or no matching combination of component name and component type is found in the reference dataset, there is likely to be an error, and the prediction accuracy is lower than otherwise.

Where a component type is found that matches no component type in the reference dataset, it is likely that the symbol representing the component type cannot be automatically identified, e.g. due to depiction quality or because an unknown representation of the component is used. Recognizing this can be used to automatically trigger user intervention.

Checking the combination of component name and type allows for resolving ambiguities. It may, for example, be an indicator that a component name, e.g. printed to two components of different type, was associated with the wrong one of the two components. This may allow for efficiently resolving an error and increasing prediction accuracy.

The verifying, particularly determining the estimate of the prediction accuracy, may comprise determining, based on the reference dataset, whether the component type of the detected component matches to attributes in the reference dataset associated with said component type. For example, it may be determined whether the detected alarm or signal levels are expected to be associated with the detected component type. If, for example, a detected component type is a tank and an associated signal level is detected, whereas the reference dataset indicates that there is no tank having an associated signal level, this indicates a detection error and accuracy may be lower than otherwise. This may also be used as an indicator that the detected signal level may be missing for one of the other detected components, thereby allowing for resolving ambiguities.

The verifying, particularly determining the estimate of the prediction accuracy, may comprise determining, based on the reference dataset, at least one of: determining whether a detected process-related attribute, such as a detected alarm level and/or signal level, is present in the reference dataset and/or whether a combination of the detected component and detected process-related attribute, e.g. alarm level matches, a combination of a candidate component and process-related attribute, e.g. alarm level, in the reference dataset.

A match may, for example, be detected in case an alarm level is detected in the graphical engineering data and there is an actual value or an indication of an existence of a value for said alarm level in the reference data. That is, finding a match based on the alarm level may not necessarily refer to comparing value of the alarm level between the graphical engineering data and the reference data, but the existence of a respective alarm level (e.g. "high", or "low low") as shown in the graphical engineering data P&ID. For example, in some tables provided as reference dataset, there may be a value when the alarm level exists and otherwise no value (blank or some indication that there is no value like "-" or "na"). In some examples of reference data, for example in case of a signal list where each signal value, e.g. alarm level value, (e.g. "LLL", "LL", "L, "H", "HH", "HHH"), is listed, for example in a separate row of a table, a match may be when the respective signal, e.g. alarm level value, is included in the list.

Similarly to the above discussion regarding the component type, the absence of a detected process-related attribute in the reference dataset may indicate that intervention is required. Regarding a combination of detected component and attribute, reference is made to the above explanations of a combination of component type and process-related attribute.

The verifying, particularly determining the estimate of the prediction accuracy, may comprise, based on the reference dataset, determining a name of the detected component, determining, based on the name of the detected component, whether a match is found in the reference dataset, determining a component type of the detected component and determining, based on the component type, whether a match is found in the reference dataset. Optionally, the verifying may comprise determining alarm and/or signal levels associated with the detected component, and determining, based on the alarm and/or signal levels, whether a match is found in the reference dataset.

For example, it may be checked whether a match is found in the reference dataset for a combination of the detected component name and component type and optionally alarm and/or signal level. An output may indicate whether no match, a full match, or one or more partial matches were found in the reference dataset. Assuming the same initial predicition accuracy, the prediction accuracy (after the verification) may be highest for full matches, lowest for no match, and in between for partial matches.

The method of the present disclosure may comprise, in case there is a mismatch between the determination based on the name, the determination based on the component type, and the determination based on the alarm and/or signal level, prompting further analysis aimed at resolving the mismatch and/or alerting the user and/or decreasing a confidence level of the prediction relative to an initial estimated prediction accuracy.

Thereby, any actions for resolving potential detection errors can be made in a targeted manner, particularly dependent on prediction accuracy. For example, a user-based or automated error resolution may only be prompted in case a predicted accuracy does not exceed a predetermined threshold. Optionally, there may be two thresholds, wherein a user-based error resolution is only prompted in case the lower of the thresholds is not exceeded by the prediction accuracy. When the lower threshold is exceeded and the higher threshold is not exceeded, automatic error resolution may be prompted. When the higher threshold is exceeded, no error resolution may be prompted.

Alternatively or in addition, the method of the present disclosure may comprise, in case there is a match between the determination based on the name, the determination based on the component type, and the determination based on the alarm and/or signal level, increasing a confidence level of the prediction relative to an initial estimated prediction accuracy. This may, in the above example, in some cases lead to the threshold being exceeded or one or both of the two thresholds being exceeded. Accordingly, the match may decrease the number of prompts for error resolution.

The verifying may be carried out in an iterative manner, in particular comprising, after determining that the name of the detected component does not match a name in the reference dataset, automatically modifying a name of the detected component and determining whether the modified name of the detected component matches a name in the reference dataset, wherein the modifications proceed iteratively to increasingly lower similarity between the initial and the modified name until a stop criterion is met or a match is found.

Reference is also made to the above description of modifying the output of the Al module, e.g. character-based modifications and/or semantic modifications. Proceeding in an iterative manner may increase efficiency. There are many potential modifications. Trying all modifications would require significant computing power and may not be necessary either because few iterative modifications can already yield a result that is acceptable (e.g. a threshold of estimated prediction accuracy is exceeded) or possibly any number of modifications cannot lead to successful resolution, in which case an iterative modification may allow for limiting the computing effort in a meaningful manner. For example, a stop criterion may be that a/the threshold for the estimated prediction accuracy is exceeded. As another example, a stop criterion may be a predetermined number of iterations and/or a predetermined duration being exceeded. In particular, said stop criteria may be combined.

The method of the present disclosure may comprise generating a representation of the engineering data using the detected components and/or process-related attributes, and/or generating control logic based on the detected components and/or process-related attributes, in particular based on the generated representation of the engineering data using the detected components and/or process-related attributes.

For example, as already mentioned above, a recreation of the graphical engineering data may be generated, e.g. with character-based information, such as component names, embedded therein. Automated generation of control logic may be able to leverage information on the components, names, types, interrelations, process-related attributes and their interconnections as basis for definition of the process to be controlled by the control logic.

The present disclosure also provides a processing system comprising one or more processing components configured to carry out the method of the present disclosure, particularly as described above.

The present disclosure also provides a computer program product comprising instructions which, when the program is executed by a computer, cause the computer to carry out the method of the present disclosure, particularly as described above.

The present disclosure also provides a computer-readable medium comprising instructions which, when executed by a computer, cause the computer to carry out the method of the present disclosure, particularly as described above.

The features and advantages outlined above in the context of the method similarly apply to the processing system, the computer program product, and the computer-readable medium described herein.

Further features, examples, and advantages will become apparent from the detailed description making reference to the accompanying drawings.

### BRIEF DESCRIPTION OF THE DRAWINGS

In the accompanying drawings,
Fig. 1 is a flowchart illustrating a method according to the present disclosure;
Figs. 2a and 2b are exemplary representations of engineering data in the form of a process diagram, in case of Fig. 2b with handwritten user annotations;
Fig. 3 illustrates a schematic representation of processing system according to the present disclosure;
Fig. 4 illustrates exemplary overlays that can be provided to a user to indicate a confidence level.

### DETAILED DESCRIPTION

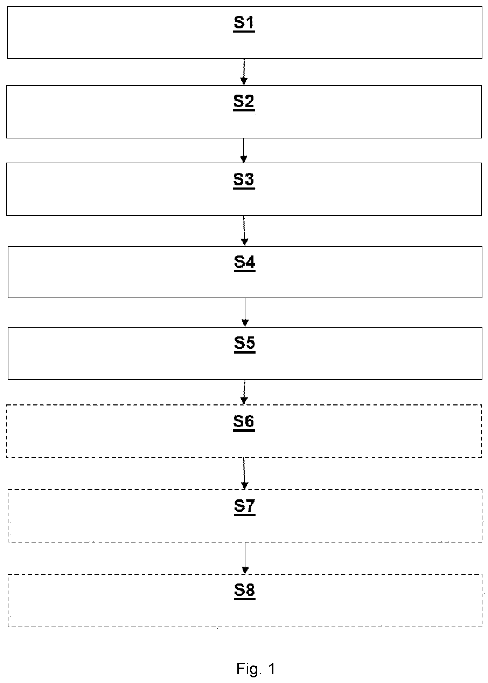

Fig. 1 is a flowchart illustrating a method for analyzing an industrial system configuration and/or industrial process by analyzing graphical engineering data representing the industrial system and/or industrial process according to the present disclosure.

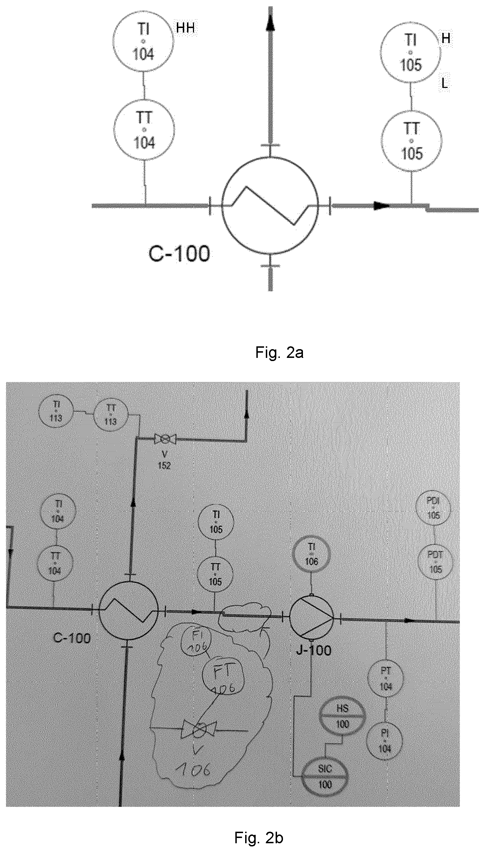

Reference will also be made to Fig. 2, which is an exemplary representation of engineering data in the form of a process diagram, for the purpose of illustrating the method steps.

The method comprises, in step S1, inputting graphical engineering data representing an industrial system and/or industrial process into an Al module, the engineering data comprising graphical elements representing components of the industrial system and/or process-related attributes of components of the industrial system.

The method comprises, in step S2, processing, by means of the Al module, the graphical engineering data, the processing comprising the Al module detecting one or more components and/or process-related attributes, e.g. alarms or role in the industrial process, represented by the graphical elements comprised in the engineering data. In an example, the Al module is configured to output a character-based, in particular text-based, representation of the detected components and/or process-related attributes, such as a name identifying the detected component and/or process-related attribute, and optionally to output a confidence level associated with each prediction.

The method comprises, in step S3, providing the detected components and/or detected process-related attributes to a verification module.

The method comprises, in step S2, accessing, by the verification module, a reference dataset, the reference dataset comprising character-based data representative of candidate components and/or candidate process-related attributes. For example, the character-based data representative of candidate components and/or candidate process-related attributes comprises may comprise at least one of: names of a candidate component, operation parameters associated with a candidate component, signal levels associated with the component, alarm levels associated with a component, potential relationship of a candidate component with one or more other components, categorization of a candidate component, in particular type of candidate component, area of the industrial system where a candidate system may be employed.

The method comprises, in step S5, verifying, by the verification module, the detected components and/or process-related attributes based on the candidate components and/or candidate process-related attributes. Examples for steps that may be comprised in the verifying will be provided further below. Optionally, in some examples, the verifying is carried out in an iterative manner, in particular comprising, after determining that the name of the detected component does not match a name in the reference dataset, automatically modifying a name of the detected component and determining whether the modified name of the detected component matches a name in the reference dataset, wherein the modifications proceed iteratively to increasingly lower similarity between the initial and the modified name until a stop criterion is met or a match is found.

The method may comprise, in optional step S6, in case there is a mismatch between the determination based on the name, the determination based on the component type, and the determination based on the alarm and/or signal level, prompting further analysis aimed at resolving the mismatch and/or alerting the user and/or decreasing a confidence level of the prediction relative to an initial estimated prediction accuracy.

The method may comprise, in optional step S7, in case there is a match between the determination based on the name, the determination based on the component type, and the determination based on the alarm and/or signal level, increasing a confidence level of the prediction relative to an initial estimated prediction accuracy.

The method may comprise, in optional step S8, generating a representation of the engineering data using the detected components and/or process-related attributes, and/or generating control logic based on the detected components and/or process-related attributes, in particular based on the generated representation of the engineering data using the detected components and/or process-related attributes.

In the following examples of what the verifying in step S5 may entail will be provided. Is to be understood that some or all of said examples may be carried out alone or in different combinations. Other examples are also possible, such that step S5 is not to be understood to be limited by said examples.

In an example, verifying comprises, particularly deterministic and/or Al-based, determining, based on the reference dataset, an estimate of a prediction accuracy for the detected components and/or process-related attributes. A prediction accuracy may depend on one or more criteria relating to the Al module's output amd the reference data, as will be come apparent from the examples below, which may be combined or individually applied based on the requirements at hand.

In an example, the verifying, particularly determining the estimate of the prediction accuracy, comprises determining, based on the reference dataset, whether the detected components and/or process-related attributes are present in the reference dataset. For example, the reference data may specify components and/or attributes expected to be present in the engineering data. If a detected component and/or attribute is missing in the reference data, this may be an indicator for an error. Accordingly, in such a case, a prediction accuracy estimate may be given a lower value or a higher value depending on whether the reference data comprose or do not comprise the component and/or attribute.

In an example, the verifying, particularly determining the estimate of the prediction accuracy, comprises determining, based on the reference dataset, whether a combination of a detected component and a detected process-related attribute of said detected component matches a combination of a candidate component and process-related attribute of said detected component in the reference dataset. For example, a component and alarm-level pair within the reference dataset may be found for a detected pair of component and alarm-level. If a match is found, the prediction accuracy may be estimated to be higher than if no match is found.

In an example, the verifying, particularly determining the estimate of the prediction accuracy, comprises determining, based on the reference dataset, whether a name of the detected component matches a candidate component name in the reference dataset, and optionally, if this is the case, whether the location and/or functional area of the detected component corresponds to the location and/or functional area of the candidate component. That is, it may be checked whether the detected component is expected in said location and/or functional area. If so, prediction accuracy may be estimated to be higher than if the detected component is not expected in said location and/or functional area.

In an example, the verifying, particularly determining the estimate of the prediction accuracy, comprises determining, whether a name of the detected component matches a predetermined naming scheme used within the reference dataset. For example, naming schemes may involve a combination of letters and numbers. If a detected component's name does not follow the naming scheme, e.g. only comprises letters, the detection accuracy may be estimated to be lower than if the naming scheme matches.

In an example, the verifying, particularly determining the estimate of the prediction accuracy, comprises determining, whether the name of the detected component matches a naming scheme associated with a component type of the detected component. For example, components of a different type may have specific naming schemes, such as being named with letters and/or numbers that are specific for the type of component and are included within the name. If a component of a specific type is detected, yet its name does not match the naming scheme associated with said type, the detection accuracy may be estimated to be lower than if the naming scheme matches the naming scheme associated with said type.

In an example, the verifying, particularly determining the estimate of the prediction accuracy, comprises determining, whether there are duplicates of a name of the detected component, in particular duplicates that are inconsistent with the reference dataset. For example, in some cases names in the reference dataset may be unique. In this case, a duplicate among the detected names indicates an error. In other cases, the names may not necessarily be unique in the reference dataset, but the duplicate among the detected names is not present in the reference dataset. This may also indicate an error. Accordingly, in both cases the estimated prediction accuracy may be lower compared to no duplicates in the detected component names or duplicates matching duplicates in the reference dataset.

In an example, the verifying, particularly determining the estimate of the prediction accuracy, comprises determining, whether a variation of a name of the detected component based on modification of characters of the name and/or a semantic variation of the name matches a candidate component name in the reference dataset. For example, there may be different characters, e.g. numbers or letters, such as "O" and "0", that are visually similar and prone to being wrongly detected. Similarly, there may be different names for similar concepts (such as "full" or "high" for a fill level). Modifying, for example iteratively, on visual or semantic similarity.

In an example, the verifying, particularly determining the estimate of the prediction accuracy, comprises determining, whether, in case a name of the detected component does not match a candidate component name in the reference dataset, retrieving known interrelations between the name and/or component type of the detected component and other components and determining, based on the interrelations, whether presence of another detected component supports potential presence of the detected component.

In an example, the verifying, particularly determining the estimate of the prediction accuracy, comprises determining, based on the reference dataset, whether a component type of the detected component, optionally provided by the Al module or derived from the Al module's output, matches a component type in the reference dataset, particularly whether both the name and the component type of a detected component and a candidate component in the reference dataset match.

In an example, the verifying, particularly determining the estimate of the prediction accuracy, comprises determining, based on the reference dataset.

In an example, the verifying, particularly determining the estimate of the prediction accuracy, comprises determining, based on the reference dataset, whether the component type of the detected component matches to attributes in the reference dataset associated with said component type.

In an example the verifying, particularly determining the estimate of the prediction accuracy, comprises determining, based on the reference dataset, determining whether a detected process-related attribute, such as a detected alarm level and/or signal level, is present in the reference dataset.

In an example the verifying, particularly determining the estimate of the prediction accuracy, comprises determining, based on the reference dataset whether a combination of the detected component and detected alarm level matches a combination of a candidate component and alarm level in the reference dataset.

In an example, the verifying, particularly determining the estimate of the prediction accuracy, comprises determining, based on the reference dataset, determining a name of the detected component and determining, based on the name of the detected component, whether a match is found in the reference dataset, and determining a component type of the detected component and determining, based on the component type, whether a match is found in the reference dataset. Optionally the verifying, particularly determining the estimate of the prediction accuracy, comprises determining, based on the reference dataset, further comprises determining alarm and/or signal levels associated with the detected component, and determining, based on the alarm and/or signal levels, whether a match is found in the reference dataset.

Figs. 2a and 2b are exemplary representations of engineering data in the form of a process diagram, specifically a P&ID, (only a portion of the respective complete diagram is shown), in case of Fig. 2b with handwritten user annotations. This illustrates the potential input data for the Al module and particularly highlights potential challenges faced when processing said input data automatically, i.e., potential presence of handwritten annotations, strike through and replacement, blurry lines, and tight arrangements of the elements, text and symbols being combined, or the like.

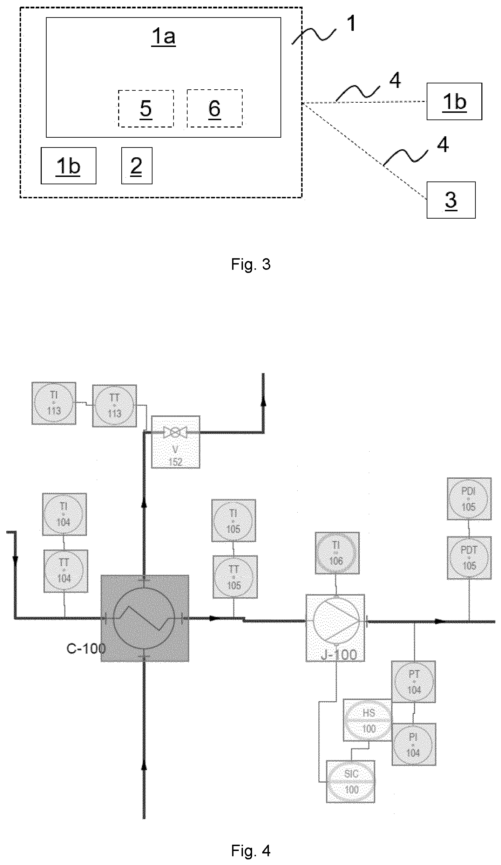

Fig. 3 shows a data processing system 1 according to the present disclosure, comprising means, for example a processing component, e.g. a processor, 1a, for carrying out the method of the present disclosure, for example one of the methods described above. A memory 1b may be provided as part of and/or connected to the processing system. The reference dataset may be stored at the memory and may be accessible to the verification module.

Optionally, the system 1 may comprise or be connected to a user output device 2, such as a display, and/or a data acquisition device 3, such as a scanner or camera. Exemplary data connections 4 are shown, which may be wired or wireless, for example.

The Al module 5 and verification module 6 are illustrated as well, for the sake of illustration at the processor 1a. However, it is to be understood that one or both of the Al module 4 and the verification module 5 may respectively be carried out by a plurality of processors, e.g. in a distributed system.

Further features and advantages will be illustrated below making reference to Figures 2a and 4.

In the following, reference is sometimes made to "tags" or "tag names". The term tag name can be used interchangeably with "name". Usually, tag names are unique and be used as identifier. It is noted that engineering tools often use an additional internal ID (like a GUID or a number), which may be unique. Thus, the method of the present disclosure may not require enforcing that the tag name is unique. This can make it easier for renaming/importing and such.

Engineering data is often available as PDF, particularly for graphical data like P&IDs (Piping and Instrumentation Diagrams) or SCDs (System Control Diagrams), potentially even obtained from scans of paper documents, for example. As such, automatically retrieving information from engineering data is challenging.

In many cases, at least some data related to the engineering data will be available in character-based form, e.g. text-based, such as for a control narrative, or table-based (e.g. in Excel or csv format), such as for tag or signal/IO-lists. Such data can be used as the reference data described herein.

In some examples, symbols in the P&ID are associated with a tag in the tag list, usually matching the tag name. In case a signal/IO list is used instead of a tag list (or in addition to a tag list), the tag name might be included in the signal or IO-list or the name of the corresponding tag is part of the signal name (e.g. the signal name has an additional ending).

There is a need to have the engineering data including the graphical data available for automated processing thereof, among others for creation of control software or the like. Ideally, the engineering data can be imported into the engineering systems for said processing.

The present disclosure employs Al modules that are able to process engineering data including the graphical engineering data.

However, the output of the Al module might be wrong or unsure with certain pieces of data (e.g. the detection of a specific symbol). The Al confidence level may depend on the symbol type within a P&ID like a certain valve type. In other words, the confidence may be dependant on the used type. For example, some types might be very rare and others used very commonly. The symbols may differ slightly depending on the used tool and/or differ between European and US standard. Accordingly, different confidence levels may be expected depending on the symbol type.

The confidence level may also depend on the quality of the input image, e.g. the Al model may have more or less difficulties in "matching" the current set of symbols (of this specific process plant) with the (standard) symbols (from the above list) depending on the quality. For example, the symbol detection itself can then result in more/less confident results (e.g. if a symbol is slightly tilted/distorted) and also the characters may be more difficult to correctly identify (e.g., reading "o"s where there should be "0"s).

In an example, the present disclosure allows for using the tag list and combining it with the Al-based detection of the P&ID. Thus, for example, the confidence level can be increased. As a consequence, for example, results are more reliable and in addition, less corrective user interaction is required.

More specifically, the usage of Al for reading the data contained on a typical P&ID (or other type of engineering data) is error-prone. Therefore, the processing of this data may not yield adequate reliability or require quite some user interaction to allow for adequate reliability. For example, the user may have to check the results, such as detected symbols/tags with its tag number and take corrective actions. In some cases an uncertainty level may be provided with the results and when the uncertainty level is insufficient, e.g. not exceed a certainty threshold, the user may be requested to intervene. The confidence level may be provided wo the user together with the result of the detection and user may selectively intervene based thereon, e.g. focus on the less confident data.

While providing the confidence level may allow for rather targeted user intervention, depending on the case at hand, there may be a large number of results below confidence levels. Consequently, many user interventions are required, reducing overall efficiency. In addition, this makes the overall method more error-prone due to many manual interventions.

The method of the present disclosure, particularly the verification, may be employed to address this challenge, particularly to verify the results output by the Al module using reference data. This can help better identify results that are more likely to be wrong, while the uncertainty pertaining to other results may be reduced. A confidence level of the results may be adjusted in the course of the verification to reduce the number of user interventions where possible by increasing confidence level where the reference data supports the Al module's output.

For example, the method of the present disclosure can increase the confidence level of a results, such as a detected graphical symbol (optionally including textual information) detected by Al module (like the representation of a tag in a P&ID).

The method of the present disclosure can take another source of data (reference data) into account to increase the confidence levels of the results, e.g. of the symbol detection.

The other source of data can be a table-based IO-list/signal list or tag list, for example.

Depending on the type of symbol, a tag would occur in both: the P&ID as well as the tag (or IO-/signal) list. It is noted that "list" is merely used as one possible example, rather than being limiting regarding the data type. For example, the reference data may be included in table format, e.g. a table having a columns specifying signal or IO-list and a column having the tags, the table configured to specify to which tag the IO-signal belongs.

As typically the reference data, e.g. the tag list, is retrieved in a digital, computer-readable character-based form (e.g. as an excel table or a database or a csv-file, or xml or json, or AAS (Asset administration shell)), hardly any errors are to be expected in reading the reference data, e.g. detecting the tag name. The data can be processed directly accessing the digital format. As such, the reference data is suitable for increasing overall confidence due to high reliability of reading the reference data.

For example, in case for example the Al module detects a transmitter with the name "PT-61850" in the P&ID and the method would also find a valve with the name "PT-61850" in the tag list, this can increase the confidence that this tag was found correctly in the P&ID.

In contrast if a tag with the name "PT-67850" is found in the P&ID but does not appear in the tag list, it is very likely a mistake. The method of the present disclosure may indicate this to a user. Alternatively or in addition, the method could check for tags that might fit, e.g. as only one (or few) mistake(s) is(are) in there, which even might be a similar number/letter (e.g. "I" or "1"). The algorithm could propose the user several options (e.g. tag does not exist, tag does exist and may be from a list of fitting tags (taking into consideration constraints like existence in the tag list, fitting type, or the like), manual correction of tag name).

The method of the present disclosure may synergistically combine Al module-based analysis of engineering data with verification based on reference data that is character-based, e.g. in a text or table-based format.

For example, the method may allow for usage of a table-based / tabular format to verify (and optionally increase the confidence level) of the Al module-based detection of graphical symbols (or other graphical artifacts) with their names (e.g. tag name or signal name) or identifiers (e.g. other means of identification) in a P&ID (or SCD).

The method of the present disclosure allows for going beyond (in some cases manual) mere comparison between tag names. It may take more aspects into consideration, e.g. alarm levels, double tags, consistency with other tags, or the like.

The method of the present disclosure allows for automatically adapting the confidence levels to the data quality, e.g. especially for brownfield plants where both formats (diagram and table-based format) are only available in paper version.

The method of the present disclosure may allow for increasing overall accuracy of the results, particularly the confidence level, thereby reducing necessity of user interactions.

Combining the Al module's output with the reference data in a verification step may be done with a deterministic method. Alternatively, at least in part, the verification may also involve using Al-based methods. For example, such Al-based methods may be employed for automatically adapting reference data or more reliable information retrieval from reference data. For example, such Al-based methods may be employed for example to allow accommodating for slightly different list-based formats, different column orders and names, combined or separated information in the different columns and so on. Similarly, use can be made of natural language processing to account for semantic variations, such as "pressure increase" or "pressure increasing" or "pressure rise" or "increasing pressure", which all semantically mean very similar concepts/things, and which hence can be seen and dealt with as "being the same".

The present method may allow, as part of or based on the verification step, proposing a correction of identified errors and/or carry out auto-correct, e.g. based on found fitting tags from tag list.

In an example, engineering data may be processed by different agents or modules being part of an Engineering Data Funnel (EDF). This engineering data funnel may allow viewing and distributing the data according to their content and format to be handled by said agents or modules.

Some agents/modules, e.g. the Al module described herein, can be configured to read P&IDs. Other modules/agents may be configured to read signal/tag lists and/or alarm lists.

Signal/tag lists and/or alarm lists contain data in a character-based format (like Excel, database, or csv). Accordingly, the likelihood of mistakes is significantly lower than, e.g., in a pdf image such as in the P&ID. A tag name may be given in one of the first columns in the tag or signal list and therefore is particularly easy to read. Thus, the tag name can be retrieved easily and reliably. In addition to the tag name, associated type name and/or alarm values may be provided, e.g. in different columns of a table.

The verification module may employ reference data that may comprise signal/tag lists and/or types and/or alarm lists for verification of output from analyzing the P&ID with the information retrieved from the signal/tag lists and/or types and/or alarm lists. This may serve to adapt the confidence levels of the output of the P&ID analysis and/or correct errors in the output and/or prompt user actions, for example.

As the P&ID will usually contain information on the tag type (e.g. transmitter, valve, pump) in addition to the tag name, the verification module can leverage all said data. In addition to the name and type of a tag, the alarm values might be indicated in the P&ID, and may be leveraged by the verification module. Information about the structure of the industrial system/process might be used by the verification module, e.g. in case a tag name is found on the P&ID but has a totally different location in the functional structure than the other tags. This might indicate a mistake.

As will be seen below, tag name, tag type, and alarm values may be used, alone or in combination, for verification.

Besides using a tag name for string comparison with output from the Al module, it can be used for one or more of: checking the existence of the name in the tag list, checking the location/functional area of the tag if that corresponds between the list and the P&ID, checking the naming scheme (e.g. whether naming scheme is applied correctly), checking if the type fits with the naming scheme, checking for double tags, checking for slight variations in the "tags" (gradually increasing variations of e.g. 'PT-61850' in the P&ID document, i.e., first vary one letter/character only, e.g., the most common ones first (like "I and 1", or "3 and 5"), then two letter variation combinations, etc.)).

OCR in P&IDs could yield probablistic combinations of characters, which in turn could be combined/compared with/to deterministic tags/names from the Signal List.

E.g., P&ID Scan OCR yields a tag "184", where
- the first char could be 1=70% prob or 7=28% prob;
- the second char could be 8=55%, 3=40%,
- the third char could be 4=99%
(especially for Brownfield plants, where OCR will be subjected to high uncertainties).

Then, if the TagList shows only "734", then conclusions can be drawn accordingly: the first char is a "7" (and not a 1), the second is "3" (and not an 8) and the last is a "4".

In case the tag list in addtion contains a tag "134", this one would be more likely and thus be placed at top-most position for correction. A tag "784" would be less likely correct than "134" but still more likely correct than "734" and thus be placed at the second position for correction.

Therefore, verification solely based on name can already resolve wrong detections.

Another example the verification may allow for resolving naming discrepancies like the following. It may be that in one of the documents, e.g. the reference data and the P&ID data, a component would (seemingly) be identified with tag name "LToo12" (wherein the "oo" characters could be wrongly identified due to bad-performing OCR algorithms), and in the other of the documents that (same) component would be identified (correctly) as "LT0012". The verification may allow rectifying such discrepancies and then determining whether the components in the two documents match.

The Al module may output a type, for example based on detection of the symbol in the P&ID. For verification, the type name of a tag from the tag/signal list can be employed. The type name may be specifically provided in the list, e.g. in its own column. Alternatively or in addition, the type may be derived from a pattern of the tag name (e.g. tag name starting with "FT" for flow transmitter). A mapping of a special device or device type (e.g. PT100 for a temperature transmitter) may be employed. For example, an instrumentation/instrument list (or motor- and component list) might be added to the reference data in case this information is not included in the tag list in case this is beneficial for the algorithm. Alternatively or in addition, the type may be derived via attributes/parameters (such as Alarm values) and/or via physical connections or signals (e.g. analog output might indicate a control valve or drive/pump).

Once the tag type is retrieved, one could do one or more checks to verify that the found tag matches to the one output by the Al module by processing the P&ID. For example, the checks may involve checking whether the tag type matches (type from tag list with symbol from P&ID processed by Al module), whether the tag type output by the Al module matches to naming scheme, whether the tag type output by the Al matches to further attributes in the tag list.

Depending on the tag type, one has to take into account that some tags may not appear in the tag list, e.g. if they are passive tags like a tank or a vessel or a manual valve. In order to verify the correct detection of such tags, e.g. a tank, one could look for associated elements, such as a level transmitter, with a similar name (e.g. in the same area / with the same number or prefix).

In case alarm values are indicated in the P&ID, as shown in Fig. 2a (alarms for temperature indicator TI-105 (H/L) and for temperature indicator TI-104 (HH), respectively), these also could be used to match the tag in the tag list. For example, the signal list or an additional alarm list may contain the alarms and possibly their values.

Using the alarm values, the verification may check existence of the indicated alarms from the P&ID output by the Al module in the signal/tag list or alarm list and/or absence of other alarms not indicated in the P&ID in the signal/tag list or alarm list.

As already mentioned, the verification module (or verification algorithm) may be deterministic and/or Al-based. In the example below, for the sake of illustration, a rather deterministic approach is described.

In this example, the tag name can be matched, optionally prior to other verification steps, such as matching a type.

This can be done by a string comparison. Therefore, the names can be trimmed (blanks cut off at the ends).

In case a tag name is detected incorrectly, the method may still find that a tag as the wrongly detected tag exists at another place. In order to mitigate effects of such errors not being recognized, the verification may detect if a tag on the P&IDs appears twice while it only appears once in the tag list. If so, one of the detections of the tag from the P&IDs is likely wrong and, in response, the user could be prompted to select which is the fitting one.

The verification may also comprise semantic comparison, e.g., when looking at the alarms, then a "high"/"low" alarm could semantically be similar to a "severe"/"uncritical" alarm. For example, a suitable NLP algorithm could be used to find similarities/mappings among these (as opposed to deterministic/straight-forward mappings).

The verification may optionally comprise a check if the tag name is according to aname scheme.

The verification may optionally comprise using information on expected location or functional unit (like System - Area - Unit) derived from the tag name. This information can be used to determine the likelihood of the correctness of the tag.

Similarly to the tag name, also the type could be checked according to the above criteria, e.g. subsequently to carrying out checks on the tag name.

Furthermore, existence of level alarms could be checked, e.g. subsequently to carrying out checks on the tag name and/or type.

Carrying out different checks allows for more accurate identification of errors.

For example, while a mismatch of a tag type might rather indicate an error of the tag type detection of the P&ID, a mismatch of an alarm value might rather just indicate inconsistencies of the provided data. Here, the verification module may be configured weigh the information.

In case the alarm information is used as well and the existence of alarms matches (in addition to the other criteria), then in some examples confidence level may be increased, for example up to or close to 100% confidence.

Some optional additional steps may be included alone or in combination.

For example, the method may comprise sorting of the tags according to a specific structure, e.g. System - Area - Unit. This structure might be given in the P&ID (in the meta data section or according to the naming of the tags (or most tags) on the diagram). This structure might also be given in the tag list in one or several of the columns. In case this structure exists in both formats, this information should be included in the comparison of the detected tag. By this, the detection of a wrong tag name that might accidentally exist in another plant part could be minimized.

As another example, the verification may comprise considering the tag type, e.g. a valve, transmitter or pump. As these have different symbols in the P&ID, the Al module may also detect the type. The tag list of the reference data may have a column of the tag type which can be used for verification. If no direct column exist in the tag list, the naming of the tag could be used to make the detection more plausible as the naming usually includes some sort of indication of type (e.g. "PT-1234" for a pressure transmitter, depending on the used naming scheme).

The method may employ an underlying knowledge data base or information model. For example, this may allow for providing typical/frequently occurring "similarities" to watch out for (like "pressure increase" or "rising pressure"; like "high/severe alarm", etc.), or by providing a set of synonyms to be aware of, e.g., when searching/reading the tag list table file's column names (to avoid searching for the name "alarms", while the respective customer calls it "alarm specs", for example). As another example, multilingual translations of words/concepts may be employed, e.g. for being able to also deal with data being provided in different languages.

The method may save user corrections and/or typical instructions to process/adapt the data for the EDF-processing of a plant's EPC data, so these human corrections and/or instructions to process/adapt the data can be re-applied when a future version of the same plant's EPC data comes in. This allows avoiding repeating previous errors.

As an example illustrating the above explanation, the Al module may detect a transmitter with the name "PT-61850" in the P&ID and the method may find a valve with the name "PT-61850" in the tag list during verification. In this case, the method may increase the confidence that this tag was found correctly in the P&ID. In contrast if a tag with the name "PT-67850" is found in the P&ID but does not appear in the tag list, it is very likely a mistake.

The verification of the present disclosure may comprise searching for gradually increasing variations, e.g. of ,PT-61850', in the P&ID document, i.e., first vary one letter/character only, e.g., the most common ones first (like "I and 1", or "3 and 5"), then two letter variation combinations, etc.).

In general, a trustability value of data taken into account in the method of the present disclosure may be used to determine the confidence level. For example, different data sources, e.g. different agents and their underlying models or algorithms, can be assigned with a base trustability value, which may depend e.g. on the input format (e.g. text or pdf), document type, customer, and segment type and possibly further criteria.

Potential outputs of the method and system may comprise a structured list or other type of representation of the found symbols (and possibly also connections), optionally along with confidence scores.

Instead of or in addition to providing the output as a list, the output can be provided as overlay to the P&ID as shown in Fig. 4.

For user interaction, the confidence level for the different symbols/tags could be provided, for example as a colored overlay where the color indicates a rather low confidence while green indicates a high confidence level.

In case only few tags are determined with a medium or low confidence level, the output could only show P&IDs containing these tags with a medium or low confidence level or a list where the user can click on to view the respective P&ID where the tag is used.

While the invention has been illustrated and described in detail in the drawings and foregoing description, such illustration and description are to be considered exemplary and not restrictive. The invention is not limited to the disclosed embodiments. In view of the foregoing description and drawings it will be evident to a person skilled in the art that various modifications may be made within the scope of the invention, as defined by the claims.

## Claims

1. Method for analyzing an industrial system configuration and/or industrial process by analyzing graphical engineering data representing the industrial system and/or industrial process, the method comprising
inputting (S1) graphical engineering data representing an industrial system and/or industrial process into an Al module, the engineering data comprising graphical elements representing components of the industrial system and/or process-related attributes of components of the industrial system;
processing (S2), by means of the Al module, the graphical engineering data, the processing comprising the Al module detecting one or more components and/or process-related attributes represented by the graphical elements comprised in the engineering data;
providing (S3) the detected components and/or detected process-related attributes to a verification module;
accessing (S4), by the verification module, a reference dataset, the reference dataset comprising character-based data representative of candidate components and/or candidate process-related attributes; and
verifying (S5), by the verification module, the detected components and/or process-related attributes based on the candidate components and/or candidate process-related attributes.

2. The method of claim 1, wherein the Al module is configured to output a character-based, in particular text-based, representation of the detected components and/or process-related attributes, such as a name identifying the detected component and/or process-related attribute, and optionally to output a confidence level associated with each prediction.

3. The method of any of the preceding claims, wherein the verifying comprises, particularly deterministic and/or Al-based, determining, based on the reference dataset, an estimate of a prediction accuracy for the detected components and/or process-related attributes.

4. The method of any of the preceding claims, wherein the verifying, particularly determining the estimate of the prediction accuracy, comprises determining, based on the reference dataset, whether the detected components and/or process-related attributes are present in the reference dataset.

5. The method of any of the preceding claims, wherein the verifying, particularly determining the estimate of the prediction accuracy, comprises determining, based on the reference dataset, whether a combination of a detected component and a detected process-related attribute of said detected component matches a combination of a candidate component and process-related attribute of said detected component in the reference dataset.

6. The method of any of the preceding claims, wherein the character-based data representative of candidate components and/or candidate process-related attributes comprises at least one of: names of a candidate component, operation parameters associated with a candidate component, signal levels associated with the component, alarm levels associated with a component, potential relationship of a candidate component with one or more other components, categorization of a candidate component, in particular type of candidate component, area of the industrial system where a candidate system may be employed.

7. The method of any of the preceding claims, wherein the verifying, particularly determining the estimate of the prediction accuracy, comprises determining, based on the reference dataset, at least one of:
whether a name of the detected component matches a candidate component name in the reference dataset, and optionally, if this is the case, whether the location and/or functional area of the detected component corresponds to the location and/or functional area of the candidate component,
whether a name of the detected component matches a predetermined naming scheme used within the reference dataset,
whether the name of the detected component matches a naming scheme associated with a component type of the detected component,
whether there are duplicates of a name of the detected component, in particular duplicates that are inconsistent with the reference dataset,
whether a variation of a name of the detected component based on modification of characters of the name and/or a semantic variation of the name matches a candidate component name in the reference dataset,
whether, in case a name of the detected component does not match a candidate component name in the reference dataset, retrieving known interrelations between the name and/or component type of the detected component and other components and
determining, based on the interrelations, whether presence of another detected component supports potential presence of the detected component.

8. The method of any of the preceding claims, wherein the verifying, particularly determining the estimate of the prediction accuracy, comprises determining, based on the reference dataset, at least one of:
whether a component type of the detected component, optionally provided by the Al module or derived from the Al module's output, matches a component type in the reference dataset, particularly whether both the name and the component type of a detected component and a candidate component in the reference dataset match,
whether the component type of the detected component matches to attributes in the reference dataset associated with said component type.

9. The method of any of the preceding claims, wherein the verifying, particularly determining the estimate of the prediction accuracy, comprises determining, based on the reference dataset, at least one of:
determining whether a detected process-related attribute, such as a detected alarm level and/or signal level, is present in the reference dataset and/or whether a combination of the detected component and detected process-related attribute, e.g.
alarm level, matches a combination of a candidate component and process-related attribute, e.g. alarm level, in the reference dataset.

10. The method of any of the preceding claims, wherein the verifying, particularly determining the estimate of the prediction accuracy, comprises determining, based on the reference dataset:
determining a name of the detected component and determining, based on the name of the detected component, whether a match is found in the reference dataset,
determining a component type of the detected component and determining, based on the component type, whether a match is found in the reference dataset,
optionally determining alarm and/or signal levels associated with the detected component, and determining, based on the alarm and/or signal levels, whether a match is found in the reference dataset.

11. The method of claim 10 comprising,
in case there is a mismatch between the determination based on the name, the determination based on the component type, and the determination based on the alarm and/or signal level, prompting (S6) further analysis aimed at resolving the mismatch and/or alerting the user and/or decreasing a confidence level of the prediction relative to an initial estimated prediction accuracy, and/or
in case there is a match between the determination based on the name, the determination based on the component type, and the determination based on the alarm and/or signal level, increasing a confidence level of the prediction relative to an initial estimated prediction accuracy.

12. The method of any of the preceding claims, wherein the verifying is carried out in an iterative manner, in particular comprising, after determining that the name of the detected component does not match a name in the reference dataset, automatically modifying a name of the detected component and determining whether the modified name of the detected component matches a name in the reference dataset, wherein the modifications proceed iteratively to increasingly lower similarity between the initial and the modified name until a stop criterion is met or a match is found.

13. The method of any of the preceding claims, further comprising generating (S7) a representation of the engineering data using the detected components and/or process-related attributes, and/or generating control logic based on the detected components and/or process-related attributes, in particular based on the generated representation of the engineering data using the detected components and/or process-related attributes.

14. A data processing system (1) comprising one or more processing components (1a) configured to carry out the method of any of claims 1 to 13.

15. A computer program product comprising instructions which, when the program is executed by a computer, cause the computer to carry out the method of any of claims 1 to 13.

16. A computer-readable medium comprising instructions which, when executed by a computer, cause the computer to carry out the method of any of claims 1 to 13.
